Europäisches Patentamt

European Patent Office

Office européen des brevets

(11) Veröffentlichungsnummer: **0 214 562**
**B1**

(12) **EUROPÄISCHE PATENTSCHRIFT**

(45) Veröffentlichungstag der Patentschrift:
**17.01.90**

(51) Int. Cl.⁴: **B65H 75/14**

(21) Anmeldenummer: **86111923.8**

(22) Anmeldetag: **28.08.86**

(54) Aufnahmespule für insbesondere bandförmiges Wickelgut.

(30) Priorität: **06.09.85 DE 8525459 U**

(43) Veröffentlichungstag der Anmeldung:
**18.03.87 Patentblatt 87/12**

(45) Bekanntmachung des Hinweises auf die Patenterteilung:
**17.01.90 Patentblatt 90/3**

(84) Benannte Vertragsstaaten:
**BE FR GB IT NL**

(56) Entgegenhaltungen:
**DE-A- 2 251 849**
**US-A- 3 661 341**
**US-A- 3 822 841**
**US-A- 3 958 775**

(73) Patentinhaber: **Häfner & Krullmann GmbH, Krentruper Strasse 7, D-4817 Leopoldshöhe(DE)**

(72) Der Erfinder hat auf seine Nennung verzichtet

(74) Vertreter: **Loesenbeck, Karl-Otto, Dipl.-Ing. et al, Jöllenbecker Strasse 164, D-4800 Bielefeld 1(DE)**

**Beschreibung**

Die vorliegende Erfindung betrifft eine Aufnahmespule für insbesondere bandförmiges Wickelgut, wie beispielsweise Flachkabel für Computer, Metallband für die Chipsherstellung od.dgl., bestehend aus zwei Flanschscheiben und einem zylindrischen Kern, wobei der Kern im Bereich seiner Stirnseiten mit einer Vielzahl von in Achsrichtung vorstehenden Rastzungen versehen ist, welche in korrespondierende Rastausnehmungen der Flanschscheiben eingerastet sind. Aus der US-PS 3 958 775 ist eine aus Karton gefertigte Aufnahmespule bekannt. Der Kern wird aus einem flachen Zuschnitt geformt. Die Endscheiben haben zwei auf unterschiedlichen Lochkreisen liegende Durchbrechungen. In die äußeren Durchbrechungen werden die vorstehenden Zungen des zu einem Zylinder geformten Kernes gesteckt, dann zur Mitte hin umgebogen und in die inneren Durchbrechungen gesteckt. Das Zusammensetzen einer derartigen Spule ist äußerst umständlich, da der Kern zunächst so zu formen ist, daß die Rastzungen in die entsprechenden Rastausnehmungen einzuführen sind und durch das Umbiegen und Einstecken in die anderen Durchbrechungen. Diese vorbekannte Spule ist eine nicht wiederverwendbare Einwegspule. In der Praxis ist es notwendig, daß nach dem Zusammensetzen die Spulen gestapelt werden können, ohne daß die Gefahr besteht, daß ein Stapel umkippt.

Der vorliegenden Erfindung liegt die Aufgabe zugrunde, eine Aufnahmespule der gattungsgemäßen Art so zu gestalten, daß sie formstabil und mehrfach verwendbar ist, daß die Kerne im Bedarfsfalle ausgewechselt werden können und daß ein aus mehreren Spulen gebildeter Stapel standsicher ist.

Die gestellte Aufgabe wird erfindungsgemäß dadurch gelöst, daß die Rastzungen auf mindestens einer Stirnseite des Kernes durch über den Rastbereich hinaus vorstehende Laschen verlängert sind, und daß jede Flanschscheibe auf ihrer Außenseite mit auf dem gleichen Teilkreis wie die Laschen liegenden Kammern versehen ist.

Der Kern mit den angeformten Rastzungen sowie die Flanschscheiben bestehen vorzugsweise aus einem geeigneten Kunststoff. Die erfindungsgemäße Aufnahmespule bietet den Vorteil, daß sie äußerst formstabil und selbst bei robuster Betriebsweise sehr oft verwendbar ist, wobei sogar die Möglichkeit besteht, daß zerstörte Kerne ausgewechselt werden können. Da die vorstehenden Laschen in die entsprechenden Kammern einer darüberliegenden Aufnahmespule eingreifen, ist die Verbindung im Sinne eines Formschlusses zu sehen, so daß die Aufnahmespulen beispielsweise auf Paletten gestapelt werden können, ohne daß die Gefahr des Umkippens beim Transport besteht. Die vorstehenden Laschen ermöglichen außerdem, daß ein geeignetes Werkzeug angesetzt werden kann, um die Aufnahmespulen wieder zu zerlegen.

Vorteilhafte Merkmale der Erfindung sind Gegenstand von weiteren Unteransprüchen.

In den beigefügten Zeichnungen sind Ausführungsbeispiele der Neuerung dargestellt, die im folgenden näher beschrieben werden.

Es zeigen:

Fig. 1 eine Ansicht einer neuerungsgemäßen Aufnahmespule, quer zur Achsrichtung gesehen,

Fig. 2 eine der Fig. 1 entsprechende Ansicht einer weiteren Aufnahmespule, gezeigt vor der Montage der die Aufnahmespule bildenden Einzelteile,

Fig. 3 eine Teilansicht einer Flanschscheibe in Richtung des Pfeiles III in Fig. 2,

Fig. 4 die andere Hälfte der Flanschscheibe, in gleicher Blickrichtung gesehen wie in Fig. 3,

Fig. 5 eine Ansicht eines Kernes einer Aufnahmespule, in Achsrichtung gesehen,

Fig. 6 einen Schnitt nach der Linie VI - VI in Fig. 5,

Fig. 7 eine Ansicht eines bandförmigen Materialstreifens, aus dem ein Kern für eine Aufnahmespule gebildet werden kann,

Fig. 8 einen Teilschnitt nach der Linie VIII - VIII in Fig. 1,

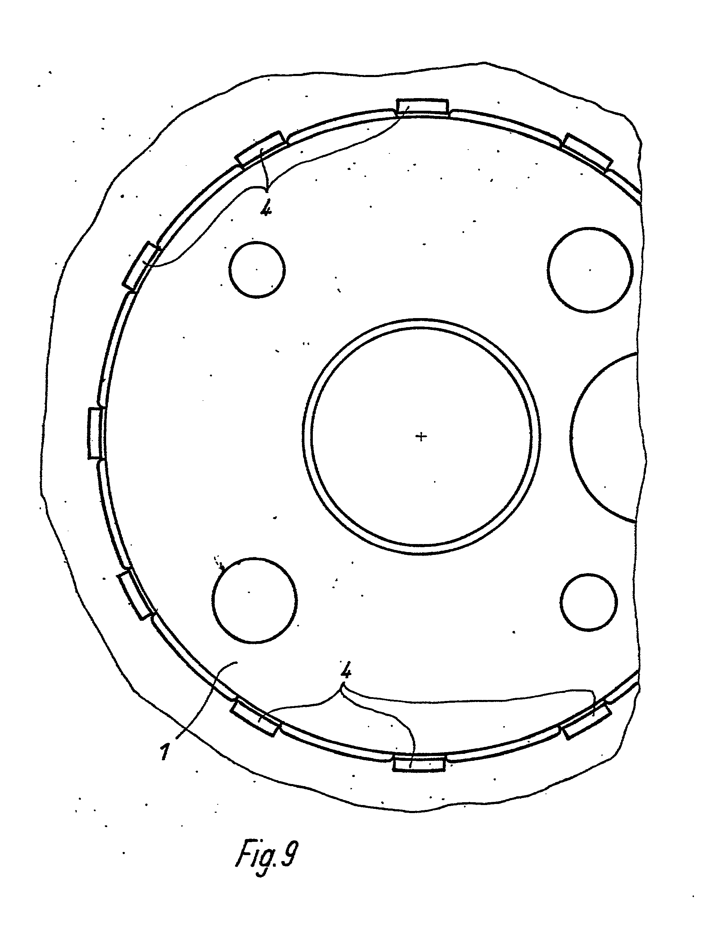

Fig. 9 eine Teilansicht einer Flanschscheibe in Richtung des Pfeiles IX in Fig. 2,

Fig. 10 einen Teilschnitt durch zwei aufeinanderliegende Flanschscheiben,

Fig. 11 einen Teilschnitt durch eine Aufnahmespule mit einer auf der Außenseite einer Flanschscheibe aufliegenden weiteren Flanschscheibe.

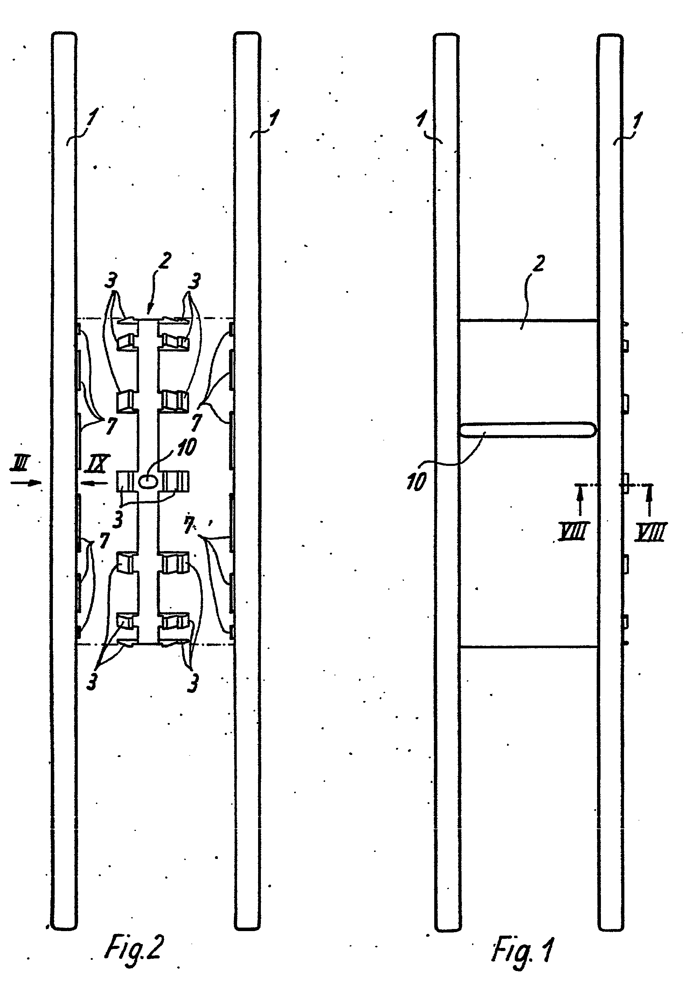

Die in Fig. 1 gezeigte Aufnahmespule besteht aus drei Einzelteilen, und zwar aus zwei untereinander gleichen Flanschscheiben 1 sowie einem Kern 2.

Sowohl die Flanschscheiben 1 wie auch der Kern 2 sind beim Ausführungsbeispiel gemäß Fig. 1 aus Kunststoff hergestellt.

Die Aufnahmespule gemäß Fig. 2 entspricht in ihrem Aufbau exakt der Aufnahmespule gemäß Fig. 1 mit dem einzigen Unterschied, daß die Breite des Kernes 2 geringer ist als die Breite des Kernes 2 beim Ausführungsbeispiel nach Fig. 1.

Fig. 2 zeigt die Aufnahmespule im noch nicht montierten Zustand und macht deutlich, daß der Kern 2 im Bereich seiner beiden Stirnseiten mit einer Vielzahl von in Achsrichtung vorstehenden Rastzungen 3 versehen ist.

Diese Rastzungen 3 sind im montierten Zustand in Rastausnehmungen 4 der Flanschscheiben 1 eingerastet, so daß sich ein fester Verbund von Flanschscheiben 1 und Kern 2 ergibt.

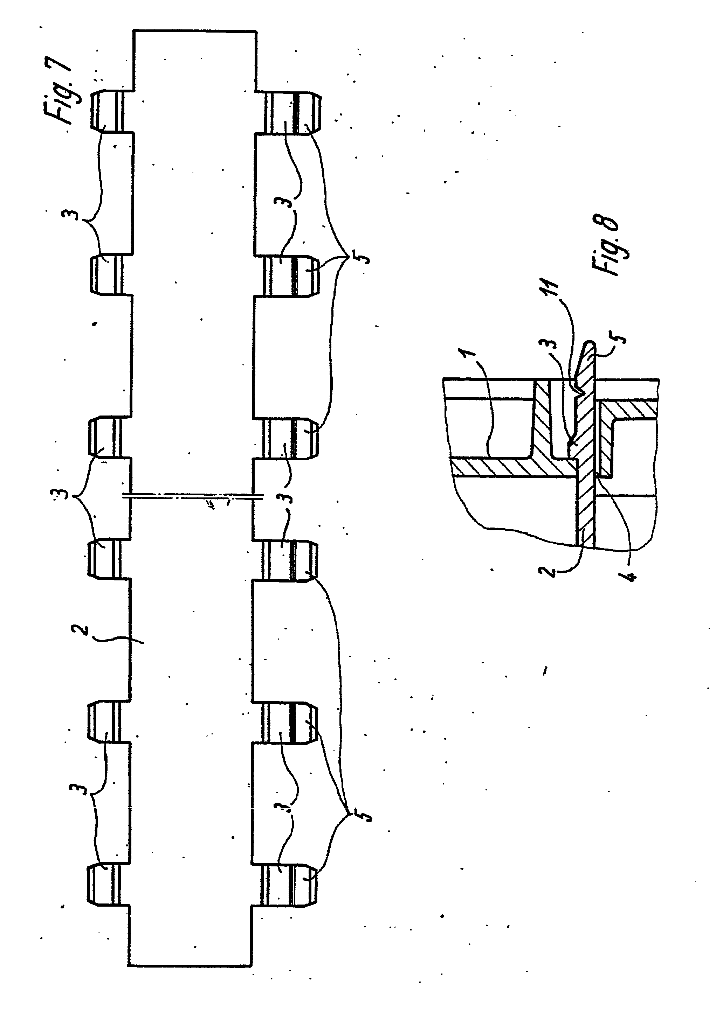

In Fig. 8 ist deutlich gezeigt, wie eine Rastzunge 3 im Bereich einer Rastausnehmung 4 einer Flanschscheibe 1 festgelegt ist.

Da die Aufnahmespulen aus den nun schon mehrfach erwähnten Einzelteilen bestehen, ist es herstellungsseitig mit geringstem Aufwand möglich, Aufnahmespulen unterschiedlicher Breiten zu fertigen. Es müssen lediglich unterschiedlich dimensionierte Kerne 2 zur Verfügung gestellt werden, so wie dies in den Fig. 1 und 2 beispielsweise gezeigt ist. Die Flanschscheiben 1 können unabhängig von der Breite des jeweiligen Kernes 2 immer Verwendung finden.

Wie die Fig. 2, 6, 7 und 11 deutlich machen, sind die Rastzungen 3 auf mindestens einer Seite des Kernes 2 über den eigentlichen Rastbereich hinaus durch angeformte Laschen 5 verlängert. Diese Laschen 5 ragen im montierten Zustand über die Außenfläche der betreffenden Flanschscheibe 1 hinaus vor. Dies zeigt Fig. 1 ebenso deutlich wie Fig. 11.

Die Flanschscheiben 1 sind außenseitig auf dem gleichen Teilkreis, auf dem sich die Laschen 5 befinden, mit Kammern 6 ausgestattet, in welche die vorstehenden Zungen 5 eingreifen können, wenn eine weitere Flanschscheibe 1 auf eine Aufnahmespule aufgelegt wird, so wie in Fig. 11 gezeigt. Es wird sich dabei in der Praxis um die Flanschscheibe 1 einer weiteren Aufnahmespule handeln. Die vorstehend beschriebene Konstruktion bietet eine hochwirksame Verschiebesicherung bei aufeinander gestapelten Aufnahmespulen.

An ihren jeweiligen dem Kern 2 zugewandten Innenseiten sind die Flanschscheiben 1 im Durchmesserbereich der Rastausnehmungen 4 mit Zentriernocken 7 versehen.

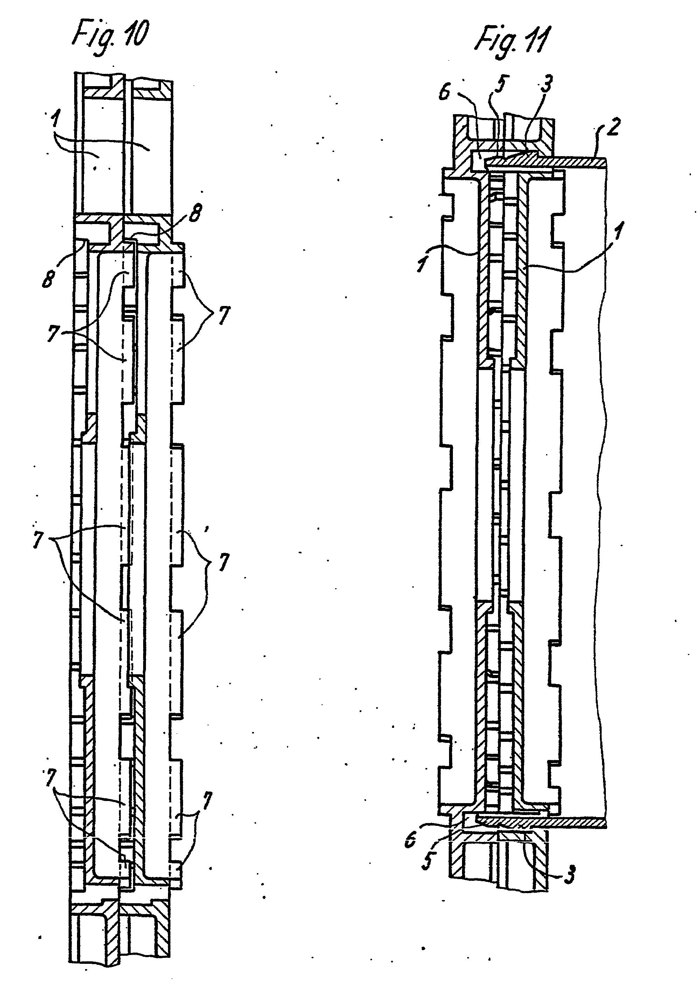

Der Hüllkreis, innerhalb dessen diese Zentriernocken 7 liegen, ist geringfügig kleiner als eine kreisförmige Vertiefung 8 auf der den Zentriernocken 7 gegenüberliegenden Seite jeder Flanschscheibe 1, so daß zwei oder mehrere Flanschscheiben 1 in der aus Fig. 10 ersichtlichen Art und Weise verschiebesicher aufeinander gestapelt werden können.

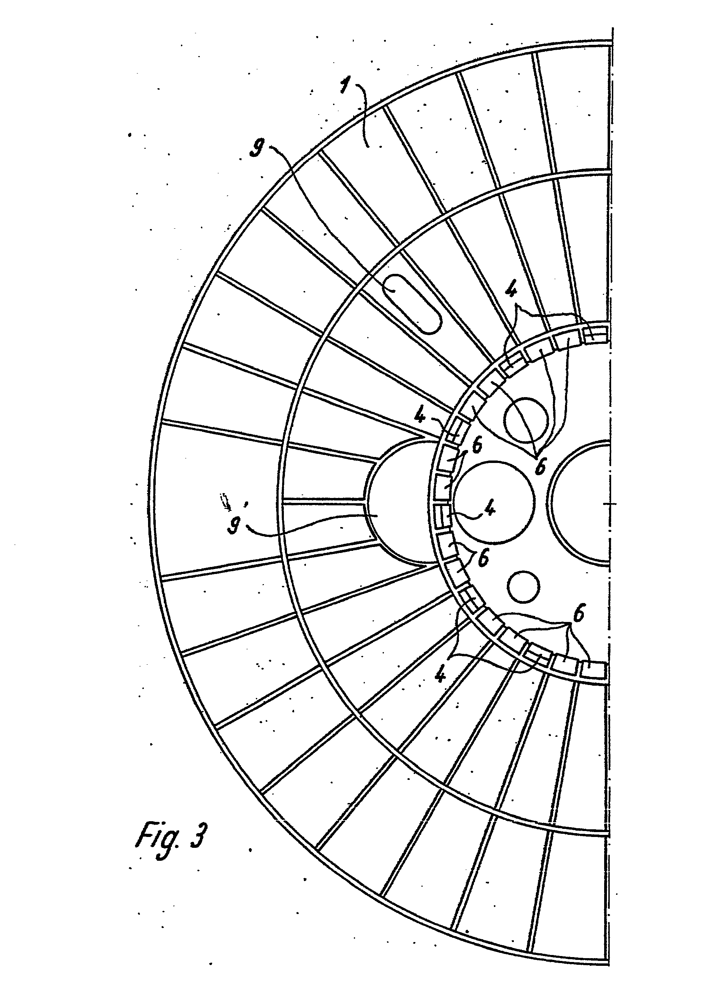

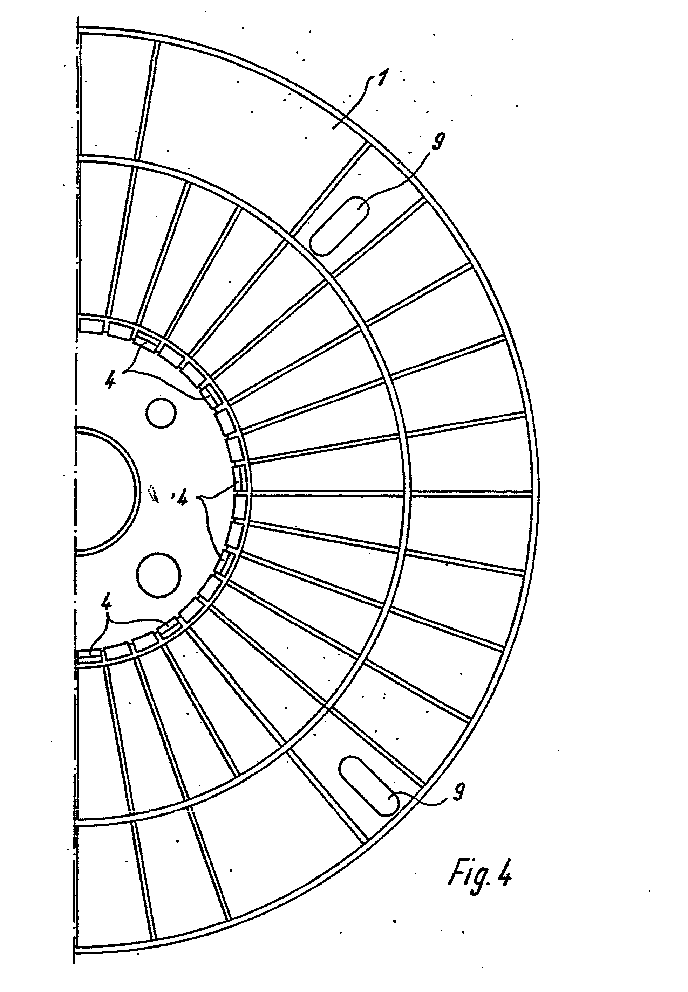

Die Fig. 3 und 4 zeigen deutlich, daß jede Flanschscheibe mit mehreren, sowohl radial wie auch in Umlaufrichtung gegeneinander versetzten Füllstands-Kontrolldurchbrüchen 9 versehen ist. Durch diese Füllstands-Kontrolldurchbrüche 9 ist problemlos jederzeit erkennbar, wieviel Wickelgut sich noch auf der Aufnahmespule befindet. Durch den Versatz dieser Füllstands-Kontrolldurchbrüche 9 zueinander wird die Stabilität der Flanschscheiben 1 praktisch nicht negativ beeinträchtigt.

In Fig. 7 ist ein bandförmiges Material gezeigt, aus dem ein Kern 2 herstellbar ist. Es kann sich hierbei beispielsweise um ein gestanztes Band handeln, welches zur Bildung eines Kernes dann entsprechend aufgerollt und an seinen beiden Enden miteinander verbunden wird.

Bei den in Figur 7 gezeigten bandförmigen Material kann es sich ebenso um ein aus Kunststoff gespritztes Band handeln, welches von Hand in die entsprechenden Rastausnehmungen 4 der Flanschscheiben 1 gesteckt wird und dadurch seine runde Form als Kern 2 erhält. In diesem Falle erübrigt sich eine Verbindung der Enden des bandförmigen Materiales.

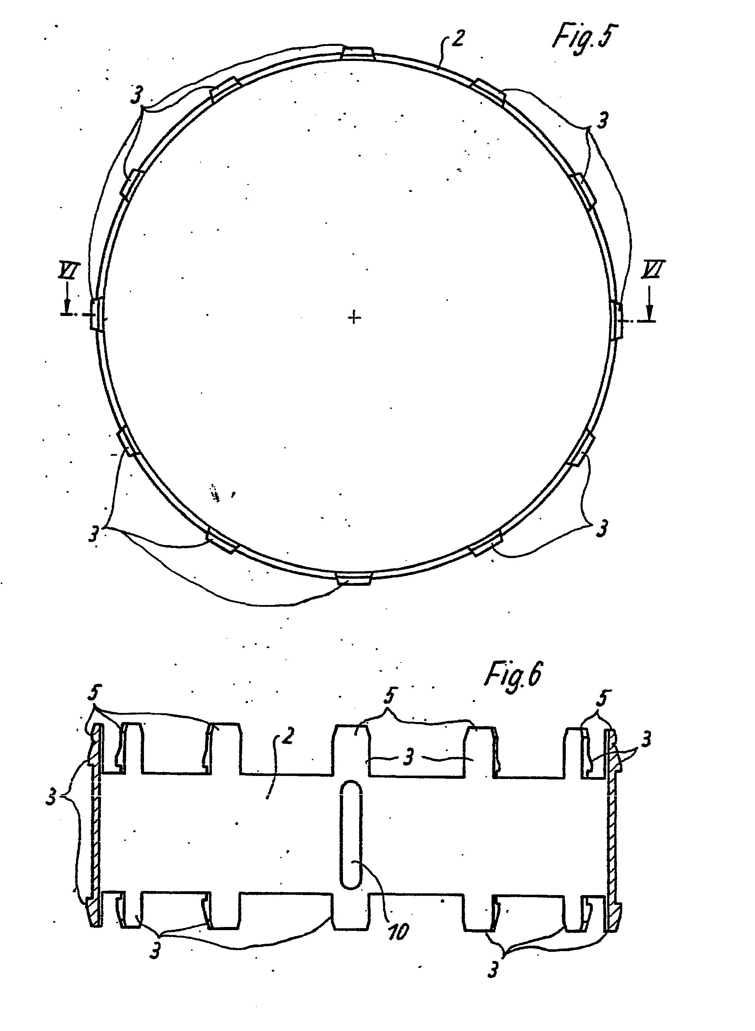

Wie insbesondere aus Figur 1 und aus Figur 6 hervorgeht, ist der Kern 2 zweckmäßigerweise an seinem Umfang mit mindestens einem Einfädelschlitz 10 ausgestattet, in dem ein Ende des Wickelgutes eingeführt werden kann.

Bei Verwendung eines bandförmigen Materiales zur Bildung des Kernes 2, so wie dies in Figur 7 dargestellt ist, kann durch entsprechende Längenabstimmung des Ausgangsmateriales erreicht werden, daß sich der Einfädelschlitz zwangsläufig ergibt, dann nämlich, wenn die Gesamtlänge des bandförmigen Materiales geringfügig kürzer gewählt wird, als der Gesamtumfang des fertigen Kernes 2.

Figur 8 macht besonders deutlich, daß zwischen den Rastzungen 3 und den über den Rastbereich hinaus vorstehenden Laschen 5 Sollbruchstellen 11 vorgesehen sein können, beispielsweise in Form von Einkerbungen, so wie dies in Figur 8 gezeigt ist. Diese Sollbruchstellen 11 ermöglichen es, die in bestimmten Anwendungsfällen möglicherweise nicht erwünschten Laschen 5 auf einfache Art und Weise durch Abbrechen zu entfernen.

Vorzugsweise sind die Kerne, sofern sie aus Kunststoff gefertigt sind, aus einem thermoplastischen Kunststoff, vorzugsweise schlagfestem Polystyrol, mit einer Wanddicke von vorzugsweise 1,4 bis 2,0 mm hergestellt.

**Patentansprüche**

1. Aufnahmespule für insbesondere bandförmiges Wickelgut, wie beispielsweise Flachkabel für Computer, Metallband für die Chipsherstellung od.dgl., bestehend aus zwei Flanschscheiben (1) und einem zylindrischen Kern (2), wobei der Kern im Bereich seiner beiden Stirnseiten mit einer Vielzahl von in Achsrichtung vorstehenden Rastzungen (3) versehen ist, welche in korrespondierenden Rastausnehmungen (4) der Flanschscheiben eingerastet sind, dadurch gekennzeichnet, daß die Rastzungen (3) auf mindestens einer Stirnseite des Kernes (2) durch über den Randbereich hinaus vorstehende Laschen (5) verlängert sind, und daß jede Flanschscheibe (1) auf ihrer Außenseite mit auf dem gleichen Teilkreis wie die Laschen (5) liegenden Kammern (6) versehen ist.

2. Aufnahmespule nach Anspruch 1, dadurch gekennzeichnet, daß der Kern (2) nebst Rastzungen (3) einstückig aus Kunststoff hergestellt ist.

3. Aufnahmespule nach Anspruch 1, dadurch gekennzeichnet, daß der Kern (2) nebst Rastzungen (3) aus einem bandförmigen Material hergestellt ist.

4. Aufnahmespule nach einem oder mehreren der vorhergehenden Ansprüche, dadurch gekennzeichnet, daß mindestens eine Flanschscheibe (1) mit mehreren, sowohl radial wie auch in Umlaufrichtung gegeneinander versetzten Füllstandskontrolldurchbrüchen (9) versehen ist.

5. Aufnahmespule nach einem oder mehreren der vorhergehenden Ansprüche, dadurch gekennzeichnet, daß jede Flanschscheibe (1) im Bereich der Rastausnehmungen (4) mit axial vorspringenden und auf einem Kreis liegenden Zentriernocken (7) versehen und auf der gegenüberliegenden Seite mit einer hinsichtlich ihres Innendurchmessers geringfügig größeren, kreisförmigen Vertiefung (8) versehen ist.

6. Aufnahmespule nach einem oder mehreren der vorhergehenden Ansprüche, dadurch gekennzeichnet, daß der Kern (2) an seinem Umfang mindestens mit einem Einfädelschlitz (10) versehen ist.

7. Aufnahmespule nach einem oder mehreren der vorhergehenden Ansprüche, dadurch gekennzeichnet, daß der Kern (2) aus thermoplastischem Kunststoff, vorzugsweise schlagfestem Polystyrol mit einer Wanddicke von vorzugsweise 1,4 bis 2,0 mm hergestellt ist.

8. Aufnahmespule nach einem oder mehreren der vorhergehenden Ansprüche, dadurch gekennzeichnet, daß zwischen den Rastzungen (3) und den über den Rastbereich hinaus vorstehenden Laschen (5) Sollbruchstellen (11) vorgesehen sind.

## Claims

1. A winding spool for material to be wound, in particular in strip form, such as for example flat cables for computers, metal strip for chip manufacture or the like, comprising two flange discs (1) and a cylindrical core (2), wherein in the region of its two ends the core is provided with a plurality of retaining tongues (3) which project in the axial direction and which are engaged into corresponding retaining openings (4) in the flange discs characterised in that the retaining tongues (3) are prolonged on at least one end of the core (2) by bar portions (5) which project beyond the edge region, and that each flange disc (1) is provided on its outward side with chambers (6) disposed on the same pitch circle as the bar portions (5).

2. A winding spool according to claim 1, characterised in that the core (2) with retaining tongues (3) is made in one piece from plastics material.

3. A winding spool according to claim 1, characterised in that the core (2) with retaining tongues (3) is made from a material in strip form.

4. A winding spool according to one or more of the preceding claims, characterised in that at least one flange disc (1) is provided with a plurality of filling condition monitoring apertures (9) which are displaced relative to each other both radially and in the circumferential direction.

5. A winding spool according to one or more of the preceding claims, characterised in that each flange disc (1) is provided in the region of the retaining openings (4) with axially projecting centering projections (7) which are disposed on a circle and on the opposite side is provided with a circular depression (8) which is slightly larger in respect of its inside diameter.

6. A winding spool according to one or more of the preceding claims, characterised in that at its circumference the core (10) is provided with at least one treading-in slot (10).

7. A winding spool according to one or more of the preceding claims, characterised in that the core (2) is made from thermoplastic material, preferably impact-resistant polystyrene of a gauge of preferably 1.4 to 2.0 mm.

8. A winding spool according to one or more of the preceding claims, characterised in that desired-fracture locations (11) are provided between the retaining tongues (3) and the bar portions (5) which project beyond the retaining region.

## Revendications

1. Bobine réceptrice pour du produit enroulé notamment en bande, comme par exemple un câble plat pour ordinateurs, de la bande métallique pour la fabrication de puces électroniques ou similaires, constitué de deux disques de joues (1) et d'un noyau cylindrique (2), le noyau étant pourvu dans la région de ses deux côtés frontaux d'une multiplicité de languettes d'encliquetage (3) dépassant dans le sens axial, qui sont encliquetées dans des évidements d'encliquetage correspondants (4) des disques de joues, caractérisée en ce que les languettes d'encliquetage (3) sont prolongées, sur au moins un côté frontal du noyau (2), par des pattes (5) dépassant au-delà de la région de bord, et en ce que chaque disque de joue (1) est muni, sur son côté extérieur, de chambres (6) situées sur le même cercle primitif de référence que les pattes (5).

2. Bobine réceptrice selon la revendication 1, caractérisée en ce que le noyau (2) est réalisé d'une seule pièce en matière plastique avec les languettes d'encliquetage (3).

3. Bobine réceptrice selon la revendication 1, caractérisé en ce que le noyau (2) est réalisé, avec les languettes d'encliquetage (3), dans un matériau en forme de bande.

4. Bobine réceptrice selon l'une quelconque des revendications précédentes, caractérisée en ce qu'au moins un disque de joue (1) est muni de plusieurs ajours de contrôle de niveau de remplissage (9), décalés les uns par rapport aux autres tant radialement que dans le sens circonférentiel.

5. Bobine réceptrice selon l'une quelconque des revendications précédentes, caractérisée en ce que chaque disque de joue (1) est muni, dans la région des évidements d'encliquetage (4), d'ergots de centrage (7) en saillie axialement et situés sur un cercle, et, sur le côté en vis-à-vis, d'un renforcement circulaire (8) de diamètre intérieur légèrement plus grand.

6. Bobine réceptrice selon l'une quelconque des revendications précédentes, caractérisée en ce que le noyau (2) est muni sur sa périphérie d'au moins une fente d'enfilage (10).

7. Bobine réceptrice selon l'une quelconque des revendications précédentes, caractérisée en ce que le noyau (2) est réalisé en matériau thermoplastique, de préférence en polystyrène résistant aux intempéries, avec une épaisseur de paroi de préférence comprise entre 1,4 et 2,0 mm.

8. Bobine réceptrice selon l'une quelconque des revendications précédentes, caractérisée en ce que des points destinés à la rupture (11) sont prévus entre les languettes d'encliquetage (3) et les pattes (5), lesquelles dépassent au-delà de la région d'encliquetage.

**Fig.2**

**Fig. 1**

Fig. 3

*Fig. 4*

Fig.5

Fig.6

Fig. 7

Fig. 8

*Fig.9*

Fig. 10    Fig. 11